# EUROPEAN PATENT SPECIFICATION

(11) **EP 3 891 451 B1**
(45) Date of publication and mention of the grant of the patent: **02.11.2022**
(21) Application number: 18816015.4
(22) Date of filing: 06.12.2018
(51) Int. Cl.: F25D 23/00, F04B 39/00, F04B 53/00, F16F 15/08

(54) **REFRIGERATOR WITH A COMPRESSOR**
KÜHLSCHRANK MIT EINEM KOMPRESSOR
REFRIGERATEUR AVEC UN COMPRESSEUR

(43) Date of publication of application: 13.10.2021
(73) Proprietor: ELECTROLUX APPLIANCES AKTIEBOLAG, 105 45 Stockholm (SE)
(72) Inventor: GROTTO, Sergio, 33080 Porcia PN (IT)
(74) Representative: Electrolux Group Patents
(86) International application number: PCT/EP2018/083819
(87) International publication number: WO 2020/114600

(56) References cited:
- WO-A1-2016/188643
- DE-A1-102012 218 697
- FR-A1- 2 766 535
- US-A1- 2005 169 775

## Description

### Field of the invention

The present invention concerns the field of refrigerators. In particular, the present invention refers to a refrigerator comprising a compressor.

### Background Art

Refrigerators or combined refrigerators/freezers are widely used. For cooling goods inside a cooling compartment of the refrigerator, a compressor is used for compressing a gaseous cooling medium which thereby is heated up. In a condenser this heat is transferred to the environment. In an evaporator the cooling medium absorbs heat from the inside of the compartment before it is guided to the compressor. In order to keep the temperature in the compartment below a certain level, the compressor has to be operated accordingly.

The compressor during regular operation vibrates. As the compressor is connected to mounting structures of the refrigerator, the compressor vibrations are transferred /transmitted to other parts of the refrigerator, leading to undesired vibrations and sounds. It is therefore advantageous to decouple the vibrations of the compressor from other parts of the refrigerator. The compressor vibrations should not be transmitted to the mounting structures in the first place, thereby preventing the vibration of other components. The decoupling described above is challenging since the frequency spectrum of the compressor vibrations comprises low and high frequencies.

The WO 2016/188643 A1 describes a connection element for connecting a compressor to a mounting structure with an inner element preferably built of metal or steel and an outer element surrounding the inner element.

US 2005/169775 describes a support element with a first and second support member connected by elastic connection members. A spring is arranged between the first and second support members and retained by the connection members.

An object of the invention is to provide a refrigerator in which the compressor vibrations are decoupled in an optimized way.

Another object is to provide a corresponding connection element or part which allows an easy and automatic assembly.

### Disclosure of invention

The invention is based on the consideration that the transmission of compressor vibrations to structures of the refrigerator to which the compressor is connected should be minimized for an impression of high quality of the refrigerator.

Applicant has found that these vibrations can be reduced in an optimized way by providing a connection part which is built from an inner and an outer component of which the inner component is stiffer compared to the outer component, while both components have elastic elements. In this way a broad range of frequencies of the vibration spectrum of the compressor can be damped.

The invention therefore relates to a refrigerator, comprising a coolant compressor which comprises a hermetically sealed housing as well as a drive unit arranged inside the housing with a, especially piston-cylinder, unit for cyclic compression of a coolant and an electric motor for driving the unit, whereby the coolant compressor further comprises at least one connecting part for connecting the compressor, especially its housing, to a mounting structure of the refrigerator, whereby the connecting part comprises an inner element and an outer element encompassing the inner element, whereby the inner element has a larger stiffness compared to the outer element, whereby both the inner element and the outer element are built as having respective elastic elements.

Preferred embodiments of the invention are described in the dependent claims and in the description.

The term "refrigerator" also encompasses appliances which are built as a combined refrigerator/freezer. The term "compressor base" is used synonymous with "compressor support" and is preferably a part of the frame of machine and/or a mounting structure for allowing stability and a stable positioning of the refrigerator on the ground. The term "compressor bracket" denotes a part which is integrally a part of or connected, especially welded, to a base part of the compressor.

Both the inner element as well as the outer element comprise, respectively, at least one elastic element. An elastic element of the inner or outer element can preferably obtain its elastic properties by its shape and/or material. The material is preferably of the elastic type. Elastic properties can further be improved by its shape, especially by a suitable choice of the width and/or length and/or depth of the respective element. The

Preferably the outer element in a first damping region fully encompasses the inner element and in a second engagement region partly encompasses the inner element.

In a preferred embodiment, the compressor comprises at least one compressor base, the compressor base comprising at least one opening, and whereby said elastic element of said inner element comprises retaining means configured for engaging with at least one opening of the compressor base.

Preferably the retaining means are encompassed by the elastic element of the outer element. The retaining means preferably are built as or comprise elastic elements which allow them to bend during the engagement procedure with an opening and then to expand radially again in full engagement position.

In a preferred embodiment, the retaining means comprise at least one hook configured for engaging with the at least one opening of the compressor base. The respective hook in the fully engaged position preferably at least in one axial direction builds a form-locking connection with a mounting element.

The elastic properties of the inner element allow elastic movements of the retaining elements for allowing their coupling with corresponding holes of the compressor bracket. The elasticity of the retaining elements is therefore provided for insertion into the holes of the compressor bracket. In case the compressor foot / connecting part is preferably blocked/fixed through a pivot/screw, the retaining elements are fixed and their movement is hindered.

Advantageously, the respective hook in a radially outer area is encompassed by the respective elastic element of the outer element as to form a neck region.

Preferably, in the mounted configuration the neck region engages with the opening of the compressor base. For this engagement, when the hooks are led through this opening the hooks which are elastic elements of the inner element radially deform to the inside until full engagement is reached.

Preferably, the at least one elastic element of the inner element comprises a bar which protrudes from a base region, whereby the hook is integrally formed with the bar. In this way, the bar is an elastic connection between the base and the hook and can absorb various vibrations. In this way, the inner element is less stiff compared to a design of a sheath as known form the prior art.

Advantageously, the hook comprises a hook part with a contour which is a segment of a circle. Over this segment of the circle, the hook is in contact with an inner border of the opening, leading to homogenous damping characteristics of the compressor vibrations.

In a preferred embodiment, four hooks are arranged equally distanced around a circumference. The circumferential distribution of four hooks is an optimized comprises between the use of material and the absorption capability of vibrations.

Preferably, along a circumference the relation of a segment covered by the hook and a segment not covered by a hook is 95% to 50%.

Advantageously, in an axial direction in a bottom region the outer element extends larger than the inner element. In this way, the bottom region has different elastic properties than the upper parts and allows to damp vibrations. The bottom region preferably is a region of the connecting part which does not comprise an elastic element of the inner element.

Since the outer element is less stiff than the inner element, the bottom region is a part of the connecting part which is especially elastic and is able to absorb vibrations

Advantageously, in the bottom region a ring-type region of the outer element is formed.

Preferably, the inner element comprises a base region in which in radial direction the inner element has a radial extension being larger than in its other regions. In this way, a base region or foot region of the inner element is formed,

Preferably, inner element comprises a fixation channel adapted for receiving a fixation element. The fixation element is thereby preferably used to connect the connecting part to a compressor base of the refrigerator.

The at least one elastic element of the inner element preferably is adapted to get deformed when the fixation element is pushed into the fixation channel.

Advantageously, the fixation element is releasably connected to the fixation channel.

Advantageously, in the mounted configuration a mounting structure is fixed to the connecting element by the fixation element.

The fixation element preferably is an element that can be pushed in for fixation and be unscrewed for releasing, especially a pushtite screw.

The inner element preferably is made of plastic.

The outer element preferably is made of rubber. In another preferred embodiment, it can be built as a sponge

The advantages of the invention are especially as follows. The connecting part allows a strong decoupling of the vibrations of the compressor from other parts of the refrigerator, leading to significant noise reduction and therefore a pleasant experience by the user. The compressor vibrations transmitted to the appliance structure are strongly reduced. The described design with the fixation element allows an automatic assembly and leads to cost reduction and faster production times. The presence of the elastic elements allows frequency damping and engagement properties in regions where needed and at the same time allows a very stable construction of the connecting part with a long lifetime.

### Brief description of the drawings

Further characteristics and advantages of the present invention will be highlighted in greater detail in the following detailed description of preferred embodiments of the invention, provided with reference to the enclosed drawings and given as an indication and not for limiting purposes.

In particular, the attached drawings are included to provide a further understanding of the invention and are incorporated in and constitute a part of this specification. The drawings together with the description explain the principles of the invention. In the drawings, corresponding characteristics and/or components are identified by the same reference numbers. In these drawings:
- FIG. 1 shows a refrigerator with a compressor and a connecting part in a perspective rear view;
- FIG. 2 shows the connecting part according to FIG. 1 interposed between a compressor bracket and a compressor support;
- FIG. 3 shows the connecting part according to FIG. 1 in a section as indicated in FIG. 2;
- FIG. 4 shows the connecting part and the compressor bracket in a first assembly step;
- FIG. 5 shows the connecting part and the compressor bracket in a second assembly step:
- FIG. 6 shows the connecting part, the compressor bracket and the compressor support in a third assembly step;
- FIG. 7 shows the connecting part, the compressor bracket and the compressor support in a fourth assembly step;
- FIG. 8 shows the connecting part, the compressor bracket, the compressor support and a fixation element in a third assembly step;
- FIG. 9 shows the assembly step of FIG. 8 in a different perspective;
- FIG. 10 shows the connecting part, the compressor bracket, the compressor support and a fixation element in an assembled configuration; and
- FIG. 11 shows the connecting part, the compressor bracket, the compressor support and a fixation element in an assembled configuration in a different perspective.

### Detailed description of the invention

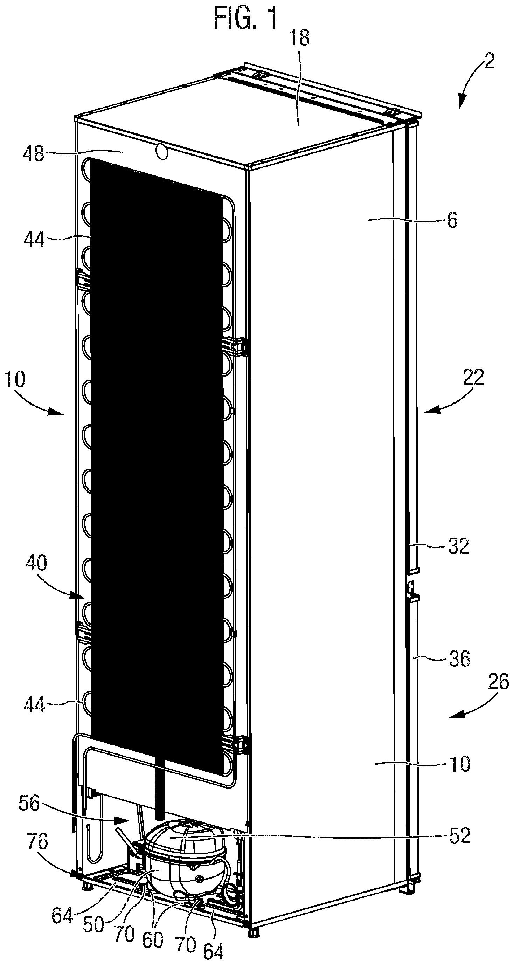

In FIG. 1, a refrigerator 2 is shown in a perspective rear view. Refrigerator 2 comprises a casing 6 with two side walls 10, a back wall 14 and a top wall 18, in which in an inner liner at least one cooling compartment 22 is arranged. Optionally, refrigerator 2 can also or alternatively comprise a freezing compartment 26. The cooling compartment 22 can be accessed by a front cooling compartment door 32, The freezing compartment 26 can be accessed by a front freezing compartment door 36.

On a backside 40 of refrigerator 2, a heat exchanging element 44 is arranged for exchanging heat of a cooling medium with the environment; the heat exchanging element 44 is preferably partly covered by / in touch with a cooling element 48 which comprises cooling fins. Refrigerator 2 comprises a coolant compressor 50 for compressing the cooling medium / agent. The compressor 50 comprises a hermetically sealed housing 52 in which a drive unit is preferably arranged in a lower part of the casing 6 in a compressor niche 56. The drive unit comprises preferably a piston-cylinder unit for cyclic compression of a coolant and an electric motor for driving the piston-cylinder-unit.

Attached to compressor 50, especially welded, at least one compressor bracket 60 is preferably provided. The respective compressor bracket is connected to a compressor support 64 by respective connecting parts 70. The compressor support 64 is preferably part of a frame 76 of refrigerator 2. The respective connecting part 70 is designed to reduce the transfer of vibrations of the compressor to the frame 76 and other parts of the refrigerator, thereby reducing the noise and vibrations of the refrigerator 2. In this way, the user obtains a high qualitative impression of the machine and disturbance due to noise is significantly reduced.

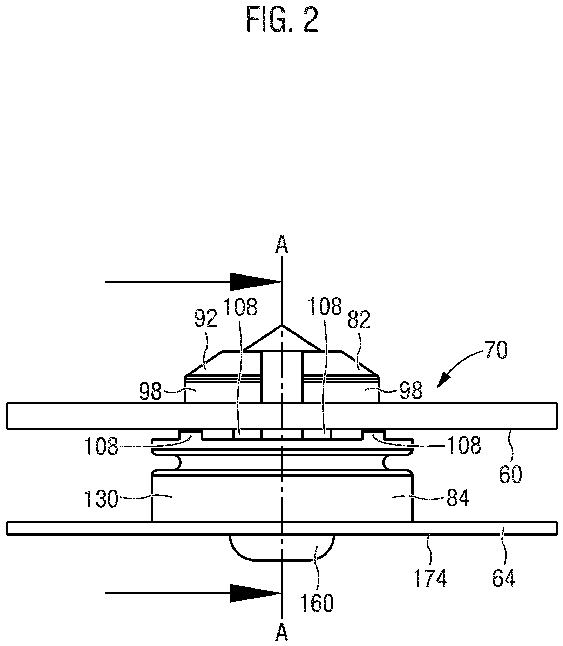

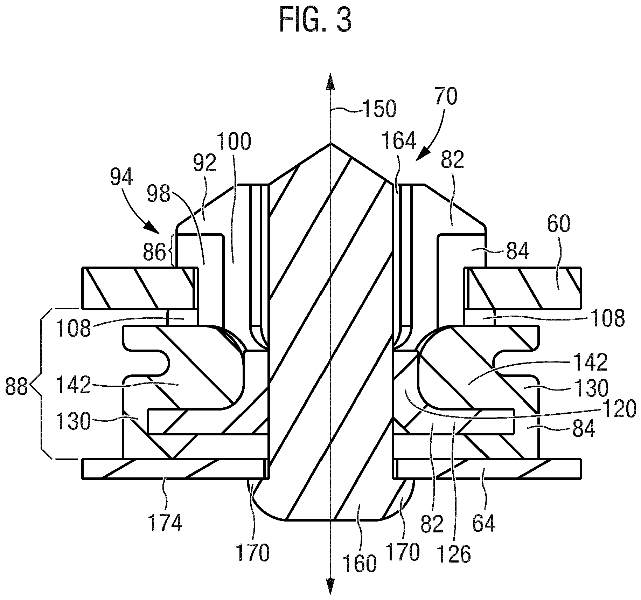

The connecting part 70 is shown in FIG. 2 in a side view together with compressor bracket 60 and compressor support 64. In FIG. 3, connecting part is shown in a section A-A indicated in FIG. 2. Connecting part 70 is built of two elements, namely an inner element 82 and an outer element 84. Outer element 84 encompasses inner element 82 at least partly. In a first damping region 88 the outer element 84 preferably fully encompasses inner element 82 and in a second engagement region 86 preferably partly encompasses inner element 82. In engagement region 86, in axial direction hooks 92 preferably exceed the outer element 84. In this way, material of the outer element 84 is saved in places where it is not necessary for the connecting part 70 to fulfil its function.

Inner element 82 has a larger stiffness than outer element 84 and is preferably built of plastic. In other words, the inner element 82 is made of a material which is stiffer than the material of the outer element 84. According to the invention, both elements are built having, respectively, at least one elastic element.

Outer element 84 is preferably made of rubber. The elastic element of the inner element 82 preferably comprises a plurality of elastic hooks 92 which are retaining elements, in the preferred embodiment shown four hooks are provided. In a neck region 94, outer element 82 forms a neck part 98 which is arranged radially outside of a straight part 100 of the respective hook 92. In the mounted configuration as shown, the compressor bracket 60 is sandwiched between the neck part 98 and a protrusion 108 formed in outer element 84. In this way, the compressor bracket is partly embedded in /encompassed by the outer element 84 which allows an efficient damping of vibrations. Since the respective hook 92 is made of the inner element 82 with a larger stiffness, a large range of frequencies can be damped.

The respective hook 92 is preferably formed integrally with an elastic bar 120 which is preferably integrally built with a foot or base part 126. In this way, the inner element 84 can absorb also vibrations which result in a radial movement of hook 92 and/or bar part 120 and can provide deformation properties to the elastic elements.

The base part 126 is preferably surrounded / encompassed by a foot part 130. In the mounted configuration, only the foot part 130 of outer element 84 which preferably is made of rubber is in contact with the compressor support 64. This preferably leads to a spring-mounted connection of connecting part 70 and compressor support 64. The fact that the stiffer element 82 is not in contact with the compressor support 64 allows specially to absorb and damp vibrations of compressor 50 with higher frequencies and avoid that they are transmitted to the machine frame. An intermediate part 142 is preferably built with an S-shaped cross section, allowing a contraction in an axial direction 150 of connecting part 70.

The connecting part 70, which is a compressor foot, comprises inner element 82 and outer element 84 which are preferably made of two different materials. The inner element 82 is preferably made of plastic which gives structure to the connecting part and serves to fix connecting part 70 to the compressor base. The outer element 84, preferably made of rubber, is especially designed to amortise vibrations of compressor 50.

As described above, an upper part of connecting element 70 preferably comprises for elastic plastic hooks 92 to fix connecting part 70 to the bottom part of the compressor, preferably via a compressor bracket 60. The hooks 92 externally are at least preferably partly covered by rubber to avoid the transmission of vibrations. A central part of the connecting part 70 is preferably composed of a rubber cylinder. The compressor is preferably supported on this part. The cylinder can have material gaps along a circumference as to allow a radial bending of hooks 92. A bottom part is preferably composed of inner element 82 covered by outer element 84. Connecting part 70 or compressor foot is placed on the compressor base /support 64 with its rubber part which functions to reduce the transmission of vibrations.

Connecting part 70 is preferably fixed to the compressor support 64 by a fixation element 160 which is lead into a fixation channel 164 formed in inner element 82 in axial direction 150. Fixation element 160 preferably comprises a collar 170 which in a fully inserted state abuts with a lower surface 174 of compressor base 64. In this way, outer element 84 is preferably partly sandwiched between compressor bracket 60 and compressor support 64 and fixed. The fixation element 160 is preferably releasably inserted into fixation channel 164. The inner element 82 is preferably adapted to get deformed when the fixation element 160 is inserted, especially the fixation channel 160 widens in a radial direction and presses against the radially outer lying outer element 84. In this way, a force-fit connection between fixation element 160 and inner element 82 is realized. In a preferred embodiment, for releasing the fixation element 160, the fixation channel 164 and the fixation element 160 are configured that the fixation element 160 can be unscrewed from the inner element 82. Since the fixation element 160 be pushed into inner element 82, the assembly process is accelerated compared to situations in which a screw would be used. Fixation element 160 is preferably built as a PUSHTITE-screw. It can be inserted only by pressure. It can be removed unscrewing as a normal screw. Its function is to block the compressor foot / connecting part 70 on compressor support 64. The fixation element can also be built as a pivot or a plastic screw

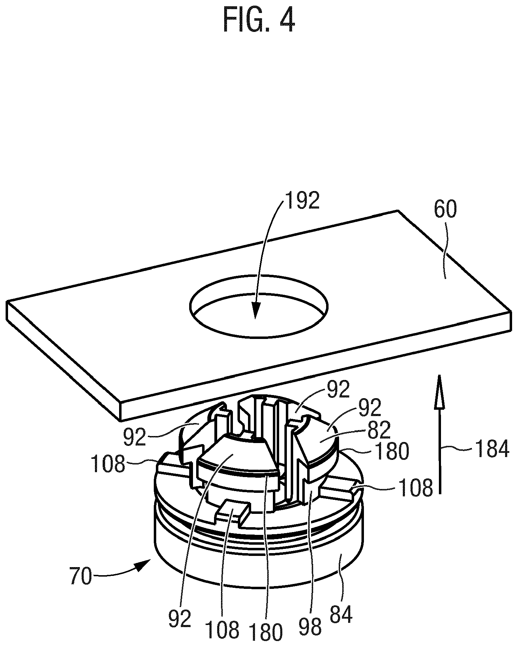

In FIGs 4-11, the assembly process of connecting part 70 with compressor bracket 60 is illustrated. As can be seen in FIG. 4, four hooks 92 are preferably distributed equally around a circumference. Each hook 92 preferably comprises a hook part with a contour 180 which is a segment of a circle. As can be seen in the FIG. along the circumference between two neighbouring hooks 92, a free space is preferably built, allowing a movement / deformation of hooks 92 along this circumferential direction.

In a first assembly step shown in FIG. 4, connecting part 70 is moved in insertion direction 184 towards compressor bracket 60 until elastic hooks 92 engage with an opening 192 built in compressor bracket 60. During the insertion of hooks 92 in opening 192, the hooks 92 as they are built of an elastic material / are built as elastic elements bend radially inwards until the neck parts 98 of outer element 84 engages with opening 192 and hooks 92 can move radially outward again for engaging with compressor bracket 60.

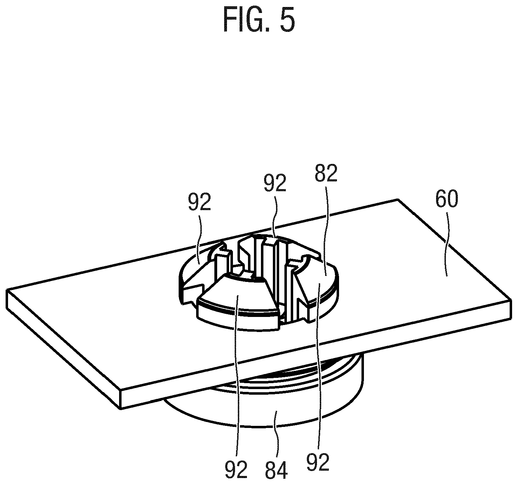

In FIG. 5 a second assembly step is shown in which connecting part 70 engages with compressor bracket 60. Hooks 92 and protrusions 108 lead to a form-fit connection between connecting part 70 and compressor bracket 60.

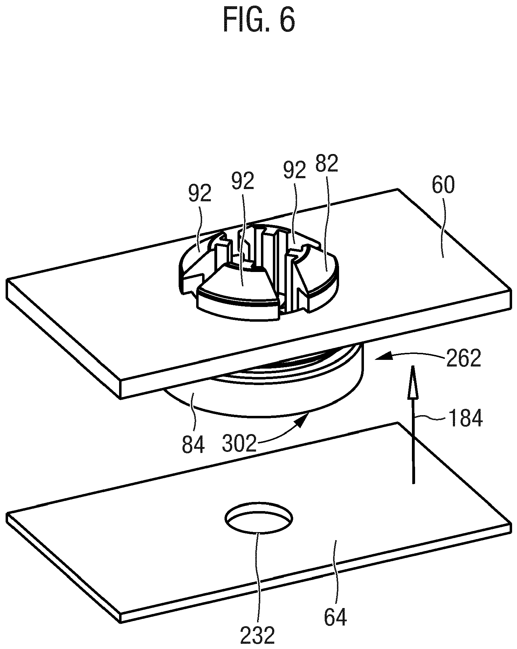

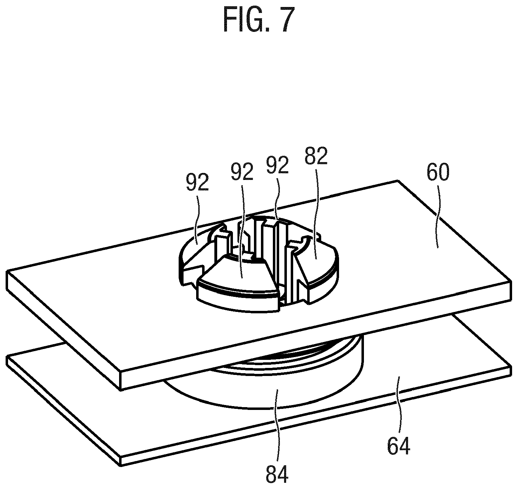

In FIG. 6, a third assembly step is shown. In this step the compressor base 64 is moved towards connecting part 70 or the compressor, having the connecting parts 70 connected on the compressor bracket as shown in fig.5, is moved toward its mounting position on the compressor base 64 /refrigerator, until compressor support 64 is in contact with a bottom side 302, which corresponds to a step shown in FIG. 7. As can be seen in FIG. 6, an opening 232 is formed in compressor support 64 through which the fixation element 160 can pass for fixing connecting part 70 to compressor support 64.

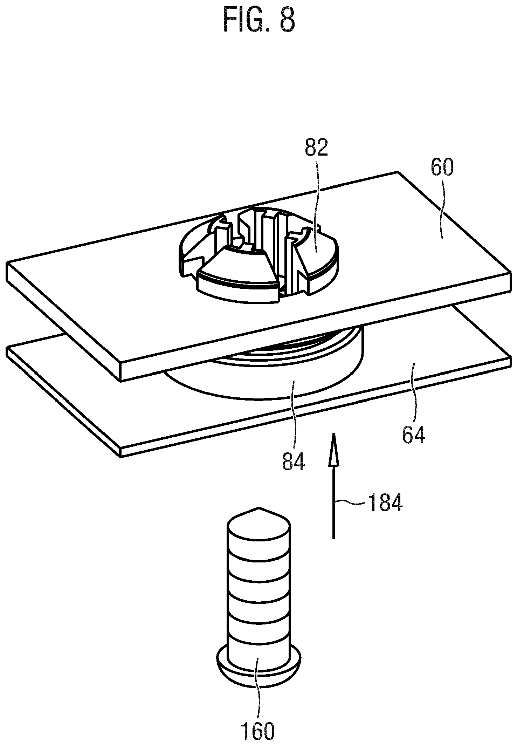

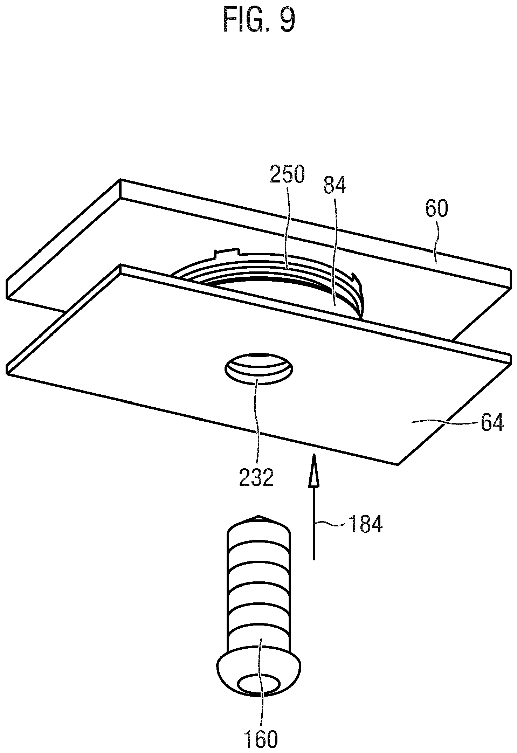

In a subsequent assembly step shown in FIG. 8, fixation element 160 is lead in direction 184 through opening 232 of compressor support 64 into the fixation channel 164 of connecting part 70. Fixation element 160 in the preferred embodiment shown is pushed into fixation channel 164, thereby radially extending / deforming fixation channel 164 and hence inner element 82, leading to a tight and force-fit connection. This assembly process can be performed very fast since no screwing is necessary. In other preferred embodiment, fixation element 164 could be a screw which is screwed into fixation channel 164 or a pivot pushed into channel 164. FIG. 9 shows this step from a different perspective. Fixation element 164 is pushed into fixation channel 164 until collar 170 is in tight contact with compressor support 64.

The assembly steps shown in FIGs 4-9 are part of a method for assembling a refrigerator 2, especially a method for connecting a compressor 50 to a mounting structure, especially a compressor support 64, of the refrigerator.

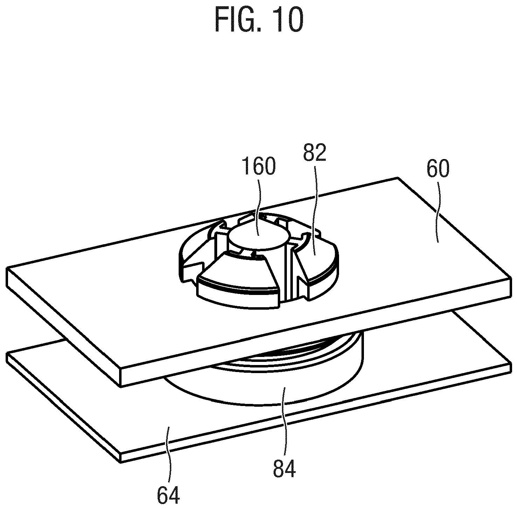

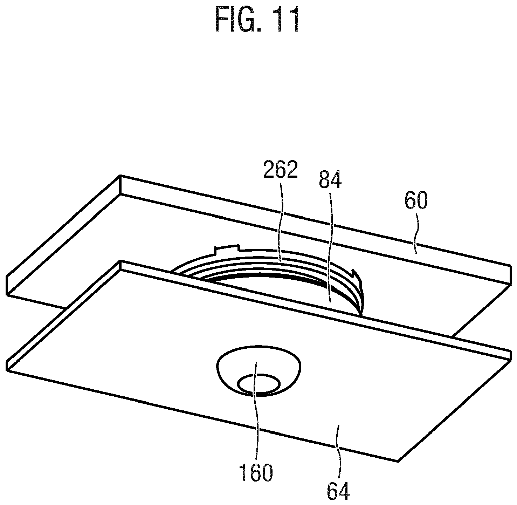

FIGs 10 and 11 show the assembled configuration in which the compressor bracket 60 is connected to the compressor support 64 by connecting part 70. In this way, the compressor 50 can be connected to a frame or casing or other mounting components of the refrigerator 2. Due to the design of the connecting element 70 as described above, vibrations of the compressor are strongly absorbed and damped by connecting part 70. Preferably, several, preferably four, connecting parts 70 are used for connecting the compressor 50 to mounting structures of the refrigerator 2.

## Claims

1. Refrigerator (2), comprising a coolant compressor (50) which comprises a hermetically sealed housing (52) as well as a drive unit arranged inside said housing with a unit for cyclic compression of a coolant and an electric motor for driving said unit, whereby said coolant compressor (50) further comprises at least one connecting part (70) for connecting said compressor (50) to a mounting structure (64) of said refrigerator (2), whereby said connecting part (70) comprises an inner element (82) and an outer element (84) encompassing said inner element (82), whereby said inner element (82) has a larger stiffness compared to said outer element (84),
**characterized in that** both said inner element (82) and said outer element (84) are built as having respective elastic elements (82, 84).

2. Refrigerator (2) according to claim 1, whereby said outer element (84) in a first damping region fully encompasses said inner element (82) and in a second engagement region partly encompasses said inner element (82).

3. Refrigerator (2) according to claim 1 or 2, whereby said compressor (50) comprises at least one compressor base (60), said compressor base (60) comprising at least an opening, and whereby said elastic element of said inner element (82) comprises retaining means (92) configured for engaging with said at least one opening (232) of said compressor base (60).

4. Refrigerator (2) according to claim 3, whereby said retaining means (92) are encompassed by said elastic element of said outer element (84).

5. Refrigerator (2) according to claim 3 or 4, whereby said retaining means comprise at least one hook (92) configured for engaging with said at least one opening (232) of said compressor base (60).

6. Refrigerator (2) according to claim 5 when depending to claim 4, whereby said at least one hook (92) in a radially outer area is encompassed by said respective elastic element of said outer element (84) as to form a neck region.

7. Refrigerator (2) according to claim 5 or 6, whereby said at least one elastic element of said inner element (82) comprises a bar (120) which protrudes from a base region (126), said hook (92) being integrally formed with said bar.

8. Refrigerator (2) according to one of the claims 5 to 7, whereby along a circumference the relation of a segment covered by said hook (92) and a segment not covered by a hook (92) is 95% to 50%

9. Refrigerator (2) according to one of the claims 1 to 8, whereby in an axial direction in a bottom region said outer element (84) extends farther than said inner element (82).

10. Refrigerator (2) according to one of the claims 1 to 9, whereby said inner element (82) comprises a base region (126) in which in radial direction said inner element has a radial extension being larger than in its other regions.

11. Refrigerator (2) according to one of the claims 1 to 10, whereby said inner element (82) comprises a fixation channel (164) adapted for receiving a fixation element (160).

12. Refrigerator (2) according to claim 11, whereby the at least one elastic element of said inner element (82) are adapted to get deformed when said fixation element (160) is pushed into said fixation channel (164).

13. Refrigerator (2) according to claim 11 or 12, whereby in the mounted configuration the mounting structure (64) is fixed to said connecting element (70) by said fixation element (160).

14. Refrigerator (2) according to one of the previous claims, whereby said inner element (82) is made of plastic.

15. Refrigerator (2) according to one of the previous claims, whereby said outer element (84) is made of rubber.

## Patentansprüche

1. Kühlschrank (2), umfassend einen Kühlmittelkompressor (50), der ein hermetisch abgedichtetes Gehäuse (52) sowie eine innerhalb des Gehäuses angeordnete Antriebseinheit mit einer Einheit zur zyklischen Verdichtung eines Kühlmittels und einen Elektromotor zum Antrieb der Einheit umfasst, wobei der Kühlmittelkompressor (50) ferner mindestens ein Verbindungsteil (70) zum Verbinden des Kompressors (50) mit einer Montagestruktur (64) des Kühlschranks (2) umfasst, wobei das Verbindungsteil (70) ein inneres Element (82) und ein das innere Element (82) umschließendes äußeres Element (84) umfasst, umschließt, wobei das innere Element (82) eine größere Steifigkeit im Vergleich zu dem äußeren Element (84) aufweist, **dadurch gekennzeichnet, dass** sowohl das innere Element (82) als auch das äußere Element (84) so gebaut sind, dass sie jeweils elastische Elemente (82, 84) aufweisen.

2. Kühlschrank (2) gemäß Anspruch 1, wobei das äußere Element (84) in einem ersten Dämpfungsbereich das innere Element (82) vollständig umschließt und in einem zweiten Eingriffsbereich das innere Element (82) teilweise umschließt.

3. Kühlschrank (2) gemäß Anspruch 1 oder 2, wobei der Kompressor (50) mindestens eine Kompressorbasis (60) umfasst, wobei die Kompressorbasis (60) mindestens eine Öffnung umfasst und wobei das elastische Element des inneren Elements (82) Haltemittel (92) umfasst, die zum Eingriff mit der mindestens einen Öffnung (232) der Kompressorbasis (60) ausgelegt sind.

4. Kühlschrank (2) gemäß Anspruch 3, wobei die Haltemittel (92) durch das elastische Element des äußeren Elements (84) umschlossen sind.

5. Kühlschrank (2) gemäß Anspruch 3 oder 4, wobei die Haltemittel mindestens einen Haken (92) umfassen, der zum Eingreifen in die mindestens eine Öffnung (232) der Kompressorbasis (60) ausgelegt ist.

6. Kühlschrank (2) gemäß Anspruch 5 in Abhängigkeit von Anspruch 4, wobei der mindestens eine Haken (92) in einem radial äußeren Bereich durch das jeweilige elastische Element des äußeren Elements (84) umschlossen ist, um einen Halsbereich zu bilden.

7. Kühlschrank (2) gemäß Anspruch 5 oder 6, wobei das mindestens eine elastische Element des inneren Elements (82) einen Stab (120) umfasst, der aus einem Basisbereich (126) herausragt, wobei der Haken (92) einstückig mit dem Stab ausgebildet ist.

8. Kühlschrank (2) gemäß einem der Ansprüche 5 bis 7, wobei entlang eines Umfangs das Verhältnis eines durch den Haken (92) abgedeckten Segments und eines nicht durch einen Haken (92) abgedeckten Segments 95 % bis 50 % beträgt.

9. Kühlschrank (2) gemäß einem der Ansprüche 1 bis 8, wobei sich das äußere Element (84) in axialer Richtung in einem unteren Bereich weiter als das innere Element (82) erstreckt.

10. Kühlschrank (2) gemäß einem der Ansprüche 1 bis 9, wobei das innere Element (82) einen Basisbereich (126) umfasst, in dem das innere Element in radialer Richtung eine größere radiale Ausdehnung als in seinen anderen Bereichen aufweist.

11. Kühlschrank (2) gemäß einem der Ansprüche 1 bis 10, wobei das innere Element (82) einen Befestigungskanal (164) umfasst, der zum Aufnehmen eines Befestigungselements (160) angepasst ist.

12. Kühlschrank (2) gemäß Anspruch 11, wobei das mindestens eine elastische Element des inneren Elements (82) dazu ausgelegt ist, sich zu verformen, wenn das Befestigungselement (160) in den Befestigungskanal (164) gedrückt wird.

13. Kühlschrank (2) gemäß Anspruch 11 oder 12, wobei in der montierten Ausbildung die Montagestruktur (64) durch das Befestigungselement (160) an dem Verbindungselement (70) befestigt ist.

14. Kühlschrank (2) gemäß einem der vorhergehenden Ansprüche, wobei das innere Element (82) aus Kunststoff besteht.

15. Kühlschrank (2) gemäß einem der vorhergehenden Ansprüche, wobei das äußere Element (84) aus Gummi besteht.

## Revendications

1. Réfrigérateur (2), comprenant un compresseur de fluide frigorifique (50) qui comprend un boîtier hermétiquement scellé (52) ainsi qu'une unité d'entraînement agencée à l'intérieur dudit boîtier avec une unité pour la compression cyclique d'un fluide frigorifique et un moteur électrique pour entraîner ladite unité, grâce à quoi ledit compresseur de fluide frigorifique (50) comprend en outre au moins une partie de raccordement (70) pour raccorder ledit compresseur (50) à une structure de montage (64) dudit réfrigérateur (2), grâce à quoi ladite partie de raccordement (70) comprend un élément interne (82) et un élément externe (84) englobant ledit élément interne (82), grâce à quoi ledit élément interne (82) a une plus grande rigidité comparé audit élément externe (84), **caractérisé en ce qu'**à la fois ledit élément interne (82) et ledit élément externe (84) sont construits comme ayant des éléments élastiques respectifs (82, 84).

2. Réfrigérateur (2) selon la revendication 1, grâce à quoi ledit élément externe (84) dans une première région d'amortissement englobe entièrement ledit élément interne (82) et dans une deuxième région de mise en prise englobe partiellement ledit élément interne (82).

3. Réfrigérateur (2) selon la revendication 1 ou la revendication 2, grâce à quoi ledit compresseur (50) comprend au moins une base de compresseur (60), ladite base de compresseur (60) comprenant au moins une ouverture, et grâce à quoi ledit élément élastique dudit élément interne (82) comprend des moyens de retenue (92) configurés pour se mettre en prise avec ladite au moins une ouverture (232) de ladite base de compresseur (60).

4. Réfrigérateur (2) selon la revendication 3, grâce à quoi lesdits moyens de retenue (92) sont englobés par ledit élément élastique dudit élément externe (84).

5. Réfrigérateur (2) selon la revendication 3 ou la revendication 4, grâce à quoi lesdits moyens de retenue comprennent au moins un crochet (92) configuré pour se mettre en prise avec ladite au moins une ouverture (232) de ladite base de compresseur (60).

6. Réfrigérateur (2) selon la revendication 5 lorsque dépendante de la revendication 4, grâce à quoi ledit au moins un crochet (92) dans une zone radialement externe est englobé par ledit élément élastique respectif dudit élément externe (84) de façon à former une région de col.

7. Réfrigérateur (2) selon la revendication 5 ou la revendication 6, grâce à quoi ledit au moins un élément élastique dudit élément interne (82) comprend une barre (120) qui fait saillie à partir d'une région de base (126), ledit crochet (92) étant formé intégralement avec ladite barre.

8. Réfrigérateur (2) selon l'une des revendications 5 à 7, grâce à quoi le long d'une circonférence la relation entre un segment couvert par ledit crochet (92) et un segment non couvert par un crochet (92) est de 95 % à 50 %.

9. Réfrigérateur (2) selon l'une des revendications 1 à 8, grâce à quoi dans une direction axiale dans une région inférieure, ledit élément externe (84) s'étend plus loin que ledit élément interne (82).

10. Réfrigérateur (2) selon l'une des revendications 1 à 9, dans lequel ledit élément interne (82) comprend une région de base (126) dans laquelle dans la direction radiale ledit élément interne a une extension radiale plus grande que dans ses autres régions.

11. Réfrigérateur (2) selon l'une des revendications 1 à 10, grâce à quoi ledit élément interne (82) comprend un canal de fixation (164) conçu pour recevoir un élément de fixation (160).

12. Réfrigérateur (2) selon la revendication 11, grâce à quoi l'au moins un élément élastique dudit élément interne (82) est conçu pour se déformer lorsque ledit élément de fixation (160) est poussé dans ledit canal de fixation (164).

13. Réfrigérateur (2) selon la revendication 11 ou la revendication 12, grâce à quoi dans la configuration montée la structure de montage (64) est fixée audit élément de raccordement (70) par ledit élément de fixation (160).

14. Réfrigérateur (2) selon l'une des revendications précédentes, grâce à quoi ledit élément interne (82) est réalisé en plastique.

15. Réfrigérateur (2) selon l'une des revendications précédentes, grâce à quoi ledit élément interne (84) est réalisé en caoutchouc.
